(19) Europäisches Patentamt
European Patent Office
Office européen des brevets

(11) **EP 3 709 656 A1**

(12) **EUROPEAN PATENT APPLICATION**

(43) Date of publication:
**16.09.2020 Bulletin 2020/38**

(51) Int Cl.:
*H04N 19/85* (2014.01)   *H04N 19/46* (2014.01)
*H04N 19/463* (2014.01)   *H04N 19/182* (2014.01)
*H04N 19/82* (2014.01)

(21) Application number: **19305282.6**

(22) Date of filing: **11.03.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **InterDigital VC Holdings, Inc.
Wilmington, DE 19809 (US)**

(72) Inventors:
• **ANDRIVON, Pierre**
  **35576 CESSON-SEVIGNE (FR)**
• **NASER, Karam**
  **35576 CESSON-SEVIGNE (FR)**
• **FRANCOIS, Edouard**
  **35576 CESSON-SEVIGNE (FR)**

(74) Representative: **Huchet, Anne
  InterDigital CE Patent Holdings
  20, rue Rouget de Lisle
  92130 Issy-les-Moulineaux (FR)**

(54) **METHOD AND DEVICE FOR PICTURE ENCODING AND DECODING WITH FORWARD AND INVERSE MAPPING MODELS**

(57)    A method for decoding is presented. A forward mapping is performed to a prediction sample corresponding to a sample of a block of a picture. The forward mapping is based on a forward mapping function modeled as a piece wise linear function. An inverse mapping, based on an inverse mapping function, is performed to a reconstructed version of the sample of the block. At least information representative of a number of pivot points of the piece wise linear function and information representative of the value of each of the pivot points are decoded.

forward mapping function

performing forward mapping, based on the forward mapping function modeled as a piece wise linear function, to a prediction sample corresponding to a sample of a block of a picture — 502

performing inverse mapping, based on an inverse mapping function, to a reconstructed version of the sample of said block — 504

encoding or decoding at least information representative of a number of pivot points of the piece wise linear function and information representative of the value of each of the pivot points — 506

bitstream

**FIG. 11**

**Description**

TECHNICAL FIELD

The present embodiments generally relate to a method and an apparatus for video encoding or decoding, and more particularly, to a method and an apparatus for simplifying forward and inverse mappings in video data reshaping.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

According to an embodiment, a method of video encoding or decoding is provided, comprising:.

performing forward mapping, based on a forward mapping function modeled as a piece wise linear function, to a prediction sample corresponding to a sample of a block of a picture; and
performing inverse mapping, based on an inverse mapping function, to a reconstructed version of said sample of said block,
wherein at least information representative of a number of pivot points of said piece wise linear function and information representative of the value of each of said pivot points are encoded or decoded.

According to another embodiment, an apparatus for video encoding or decoding is provided, comprising one or more processors, wherein said one or more processors are configured to perform:

forward mapping, based on a forward mapping function modeled as a piece wise linear function, to a prediction sample corresponding to a sample of a block of a picture; and
inverse mapping, based on an inverse mapping function, to a reconstructed version of said sample of said block,
wherein at least information representative of a number of pivot points of said piece wise linear function and information representative of the value of each of said pivot points are encoded or decoded.

The apparatus may further comprise one or more memories coupled to said one or more processors.
According to another embodiment, a signal comprising encoded video is formed by performing: performing forward mapping, based on a forward mapping function, to a prediction sample corresponding to a sample of a block of a picture; and performing inverse mapping, based on an inverse mapping function, to a reconstructed version of said sample of said block, wherein said inverse mapping function is an approximation of an inverse function of said forward mapping function, wherein said inverse mapping function is modelled as a piece-wise linear function, and wherein each piece in said piece-wise linear model is defined with a same interval length.

BRIEF DESCRIPTION OF THE DRAWINGS

- Figure 1 illustrates encoder and decoder in -loop reshaping of a prediction signal;
- Figure 2 illustrates a block diagram of a video encoder according to an embodiment;
- Figure 3 illustrates a block diagram of a video decoder according to an embodiment;
- Figure 4 illustrates the construction of a piece wise linear forward mapping function;
- Figure 5 illustrates the construction of a piece wise linear inverse mapping function;
- Figures 6 and 7 illustrate a piece wise linear forward mapping function wherein pivot points are aligned on power of two uniform sampling abscissa grid;
- Figure 8 represents a piece wise linear forward mapping function as a parametric linear model;
- Figure 9 represents a piece wise linear forward mapping function as a parametric square model;
- Figure 10 represents a piece wise linear forward mapping function with one main slope section;

- Figure 11 is a flowchart of an encoding or decoding method according to an embodiment; and
- Figure 12 illustrates a block diagram of an example of a system in which various aspects and embodiments are implemented.

DETAILED DESCRIPTION

For better coding efficiency, signal mapping may be used. Mapping (also known as reshaping) aims at better exploiting the sample value distribution of the video pictures. The mapping and inverse mapping can be out of the decoding loop. In this case the mapping directly applies to the input samples of the encoder, prior to the core encoding. The inverse mapping process applies at the decoder side to the output samples from the decoder. The mapping and inverse mapping can also be in the decoding loop, for example, as proposed in JVET-M0427 (see Taoran Lu et al. "CE12: Mapping functions (test CE12-1 and CE12-2)", JVET 13th Meeting: Marrakech, MA, 9-18 Jan. 2019, JVET-M0427-v3).

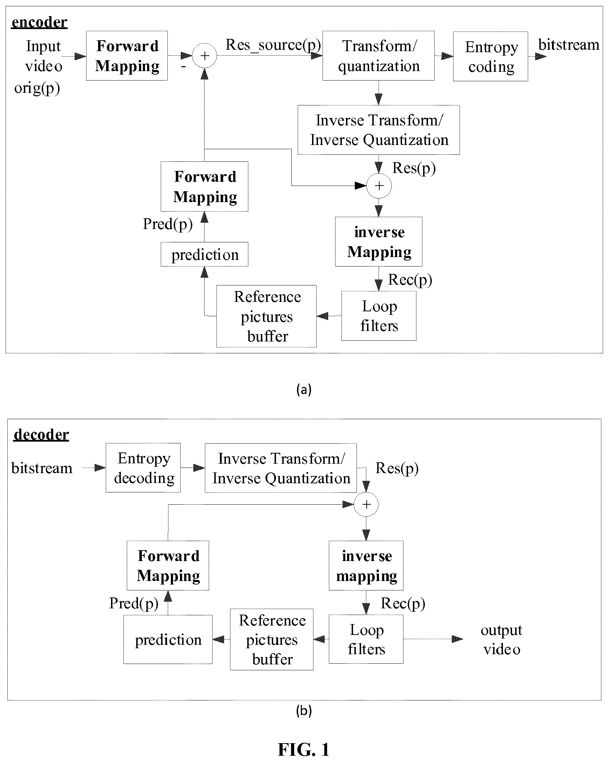

JVET-M0427_describes in-loop mapping solutions to improve coding efficiency. In this solution, a mapping of the luma or chroma signal is achieved internally in the coding loop. The mapping applies to the prediction signal, and in the encoder or decoder, additional blocks of mapping and inverse mapping are added to the conventional encoder and decoder block diagrams. This is illustrated in Figure 1 where the forward mapping is applied to the prediction luma or chroma signal.

At the encoder, the residual signal before transform and quantization, Res_source, is generated according to the following formula:

$$\text{Res\_source}(p) = \text{fwdMap}[\ \text{Orig}(p)\ ] - \text{fwdMap}[\ \text{Pred}(p)\ ] \qquad (\text{eq. 1})$$

where Orig(p) is the value of the source sample (to be coded) at location p(x,y) in the picture, Pred(p) is the value of the prediction sample, Res_source(p) is the value of the prediction residual sample before transform and quantization, and fwdMap[.] is the mapping function. Res_source(p) is then transformed and quantized. The inverse quantized and inverse transformed residual signal is noted Res(p).

At the decoder, the signal is reconstructed according to the following formula (shown in Figure 1(b)):

$$\text{Rec}(p) = \text{invMap}[\ \text{fwdMap}[\ \text{Pred}(p)\ ] + \text{Res}(p)\ ] \qquad (\text{eq. 2})$$

The reconstruction is implemented as follows:

forward mapping:

$$\text{Rec0}(p) = \text{fwdMap}[\ \text{Pred}(p)\ ] \qquad (\text{eq. 3})$$

summing up:

$$\text{Rec1}(p) = \text{Rec0}(p) + \text{Res}(p) \qquad (\text{eq. 4})$$

inverse mapping:

$$\text{Rec}(p) = \text{invMap}[\ \text{Rec1}(p)\ ] \qquad (\text{eq. 5})$$

where Rec(p) is the value of the reconstructed sample, invMap[.] is the inverse mapping function (inverse of fwdMap[.] such that invMap[ fwdMap[x] ] = x, not considering possible rounding errors). In JVET-M0427, this process is performed for each sample of the processed blocks. The functions of mapping and inverse mapping are global to the entire picture, or to areas of the picture. Among the different blocks of the picture or of the areas, the same functions are used.

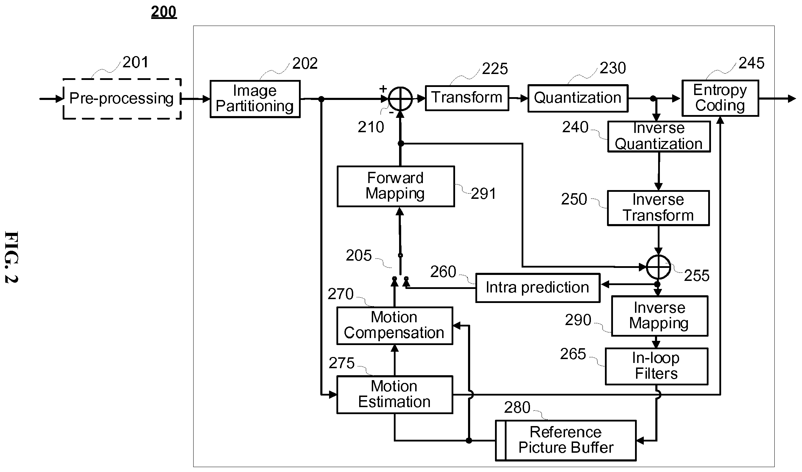

**Figure 2** illustrates an example of a video encoder 200, such as a High Efficiency Video Coding (HEVC) encoder, with the addition of the reshaping process. Figure 2 may also illustrate an encoder in which improvements are made to the HEVC standard or an encoder employing technologies similar to HEVC, such as a VVC (Versatile Video Coding) encoder under development by JVET (Joint Video Exploration Team).

In the present application, the terms "reconstructed" and "decoded" may be used interchangeably, the terms "encoded" or "coded" may be used interchangeably, and the terms "image", "picture" and "frame" may be used interchangeably. Usually, but not necessarily, the term "reconstructed" is used at the encoder side while "decoded" is used at the decoder side.

The terms HDR (high dynamic range) and SDR (standard dynamic range) are used in this disclosure. Those terms often convey specific values of dynamic range to those of ordinary skill in the art. However, additional embodiments are also intended in which a reference to HDR is understood to mean "higher dynamic range" and a reference to SDR is understood to mean "lower dynamic range". Such additional embodiments are not constrained by any specific values of dynamic range that might often be associated with the terms "high dynamic range" and "standard dynamic range".

Before being encoded, the video sequence may go through pre-encoding processing, for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In HEVC, to encode a video sequence with one or more pictures, a picture is partitioned into one or more slices where each slice may include one or more slice segments. A slice segment is organized into coding units, prediction units, and transform units. The HEVC specification distinguishes between "blocks" and "units," where a "block" addresses a specific area in a sample array (e.g., luma, Y), and the "unit" includes the collocated blocks of all encoded color components (e.g., Y, Cb, Cr, or monochrome), syntax elements, and prediction data that are associated with the blocks (e.g., motion vectors).

For coding in HEVC, a picture is partitioned into coding tree blocks (CTB) of square shape with a configurable size, and a consecutive set of coding tree blocks is grouped into a slice. A Coding Tree Unit (CTU) contains the CTBs of the encoded color components. A CTB is the root of a quadtree partitioning into Coding Blocks (CB), and a Coding Block may be partitioned into one or more Prediction Blocks (PB) and forms the root of a quadtree partitioning into Transform Blocks (TBs). Corresponding to the Coding Block, Prediction Block, and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB, and TB of the luma component applies to the corresponding CU, PU, and TU. In the present application, the term "block" may be used to refer, for example, to any of CTU, CU, PU, TU, CB, PB, and TB. In addition, the "block" may also be used to refer to a macroblock and a partition as specified in H.264/AVC or other video coding standards, and more generally to refer to an array of data of various sizes.

In the encoder 200, a picture is encoded by the encoder elements as described below. The input signals may be pre-processed, e.g. may be mapped (201). The mapping in 201 may correspond to the forward mapping in 291, or further includes other mappings for pre-processing. The picture to be encoded is processed in units of CUs (202). Each CU is encoded using either an intra or inter mode. When a CU is encoded in an intra mode, it performs intra prediction (260). In an inter mode, motion estimation (275) and compensation (270) are performed. The forward mapping (291) is applied to the predicted signals. The encoder decides (205) which one of the intra mode or inter mode to use for encoding the CU, and indicates the intra/inter decision by a prediction mode flag. Prediction residuals are calculated by subtracting (210) the mapped predicted block (from output of 291) from the pre-processed original image block, e.g. from the mapped original image block in the case where pre-processing includes mapping (from output of 201).

The prediction residuals are then transformed (225) and quantized (230). The quantized transform coefficients, as well as motion vectors and other syntax elements, are entropy coded (245) to output a bitstream. The encoder may also skip the transform and apply quantization directly to the non-transformed residual signal on a 4x4 TU basis. The encoder may also bypass both transform and quantization, i.e., the residual is coded directly without the application of the transform or quantization process. In direct PCM coding, no prediction is applied and the coding unit samples are directly coded into the bitstream.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. Inverse mapping (290) and in-loop filters (265) are applied to the reconstructed signal, for example, to perform deblocking/SAO (Sample Adaptive Offset) filtering to reduce encoding artifacts. The filtered image is stored at a reference picture buffer (280).

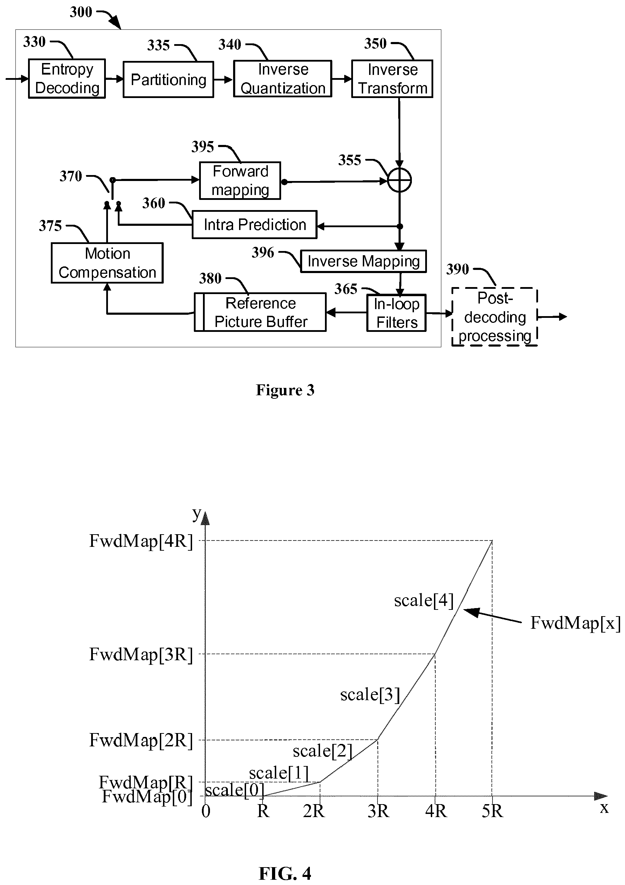

**Figure 3** illustrates a block diagram of an example of a video decoder 300, such as an HEVC decoder, with the addition of the reshaping process. In the decoder 300, a bitstream is decoded by the decoder elements as described below. Video decoder 300 generally performs a decoding pass reciprocal to the encoding pass as described in Figure 2, which performs video decoding as part of encoding video data. Figure 3 may also illustrate a decoder in which improvements are made to the HEVC standard or a decoder employing technologies similar to HEVC, such as a VVC decoder.

In particular, the input of the decoder includes a video bitstream, which may be generated by video encoder 200. The bitstream is first entropy decoded (330) to obtain transform coefficients, motion vectors, picture partitioning information, and other coded information. The picture partitioning information indicates the size of the CTUs, and a manner a CTU is split into CUs, and possibly into PUs when applicable. The decoder may therefore divide (335) the picture into CTUs, and each CTU into CUs, according to the decoded picture partitioning information. The transform coefficients are de-quantized (340) and inverse transformed (350) to decode the prediction residuals.

Combining (355) the decoded prediction residuals and the predicted block, an image block is reconstructed. The predicted block may be obtained (370) from intra prediction (360) or motion-compensated prediction (i.e., inter prediction) (375). Also the forward mapping (395) is applied to the predicted signals. In case of bi-prediction, two motion compensated predictions may be combined with a weighted sum. Inverse mapping (396) and in-loop filters (365) are applied to the reconstructed signal. The filtered image is stored at a reference picture buffer (380).

The output from the in-loop filters may go through post-decoding processing (390), e.g. inverse mapping, that performs the inverse of the process (201) performed in the pre-processing, e.g. the inverse of a mapping process. The decoded picture can further go through other post-decoding processing, for example, an inverse color transform (e.g., conversion from YCbCr 4:2:0 to RGB 4:4:4). The post-decoding processing may use metadata derived in the pre-encoding processing and signaled in the bitstream.

As described above, JVET-M0427 describes an in-loop reshaping process. In particular, the mapping function implementation in JVET-M0427 is based on a scaling table, scale[k], k = 0 to N-1, N being a power of 2 (typically 16 or 32). Each scale applies to a range of luma values. The range R is fixed and power of 2 ($R = 2^K$), and is equal to the full luma range (rangeY) divided by N. For instance, for a 10-bit luma signal, and for N=16, R = 1024/N = 64 = $2^6$ (K = 6). The mapping function fwdMap is conceptually defined as follows:

- fwdMap[0] = 0
- Then values at each k*R index, for k = 0 to N-1, are computed as follows:

  ◦ fwdMap[(k+1)*R] = fwdMap[k*R] + R * scale[k]
  ◦ Note that equivalently, scale[k] corresponds to 1 / R * (fwdMap[(k+1)*R]-fwdMap[k*R])

- The intermediate values at indices x = (k*R+1) to ((k+1)*R-1), are linearly interpolated from their surrounding values fwdMap[(k+1)*R] and fwdMap[k*R] as follows:
  ◦ fwdMap[x] = fwdMap[k*R] +
  (x - k*R) * (fwdMap[(k+1)*R] - fwdMap[k*R]) / R

The process is illustrated in **Figure 4.** Each scale is associated with a segment of the piece-wise linear mapping function. Each segment is specified on a luma range of a same length (R). Note that this process requires that the LUT fwdMap has (rangeY+1) elements, from Y = 0 to rangeY, even if the actual maximum sample value Y is equal to (rangeY-1).

The advantage of using equi-length intervals, of length R, is that the mapping of a sample value Y can be easily performed on-the-fly by a simple access to look-up-tables of limited size (size N), using an index computed from the value Y shifting by K bits. This process is conceptually as follows:

- Computation of the index k = Y / R = Y >> K, where >> is a right shift operator
- Ymap = scale[k] * Y + A[k],

where A is a look-up-table of size N, derived as follows (for k = 0 to N-1):

- A[k] = fwdMap[k*R] - k * R * scale[k]

The following syntax defined in JVET-M0427 may be used to transmit fwdMap[]:

**Table 1**

| tile_group_reshaper_model () { | Descriptor |
| --- | --- |
| **reshaper_model_min_bin_idx** | ue(v) |
| **reshaper_model_delta_max_bin_idx** | ue(v) |
| **reshaper_model_bin_delta_abs_cw_prec_minus1** | ue(v) |

(continued)

| tile_group_reshaper_model () { | Descriptor |
|---|---|
| for (i = reshaper_model_min_bin_idx; i <= reshaper_ model_max_bin_idx; i++) { | |
| **reshape_model_bin_delta_abs_CW** [i] | u(v) |
| if (reshaper_model_bin_delta_abs_CW[i]) > 0) | |
| **reshaper_model_bin_delta_sign_CW_flag**[i] | u(l) |
| } | |
| } | |

where:

- reshaper_model_min_bin_idx is representative of the abscissa (x) from which the scale[i] on Figure 4 are carried in the bitstream.
- reshaper_model_delta_max_bin_idx is representative of the abscissa (x) until which the scale[i] on Figure 4 are carried in the bitstream. This is coded relatively to reshaper_model_min_bin_idx.
- reshaper_model_bin_delta_abs_cw_prec_minus1 is representative of the number of bits used to code scale[i] or FwdMap[i] on Figure 4.
- reshape_model_bin_delta_abs_CW [i] is representative of the absolute scale[i] or FwdMap[i] on Figure 4.
- reshaper_model_bin_delta_sign_CW_flag[i]is representative of the sign of scale[i] or FwdMap[i] on Figure 4.

The forward mapping function FwdMap may be quite straightforward to apply. However, it requires to transmit in the bitstream a certain number of pivot points representative of piece-wise linear (PWL) sections. There is no flexibility on the size of each section since the forward mapping LUT reconstruction process (in case of LUT precomputation prior to processing the remapping sample-wise) or the on-the-fly reconstruction process operate on 16 PWL with uniform sampling. Additionally, a first stage of inverse mapping comprises determining the section in which the sample is to be mapped (although this may be a simple shift operation).

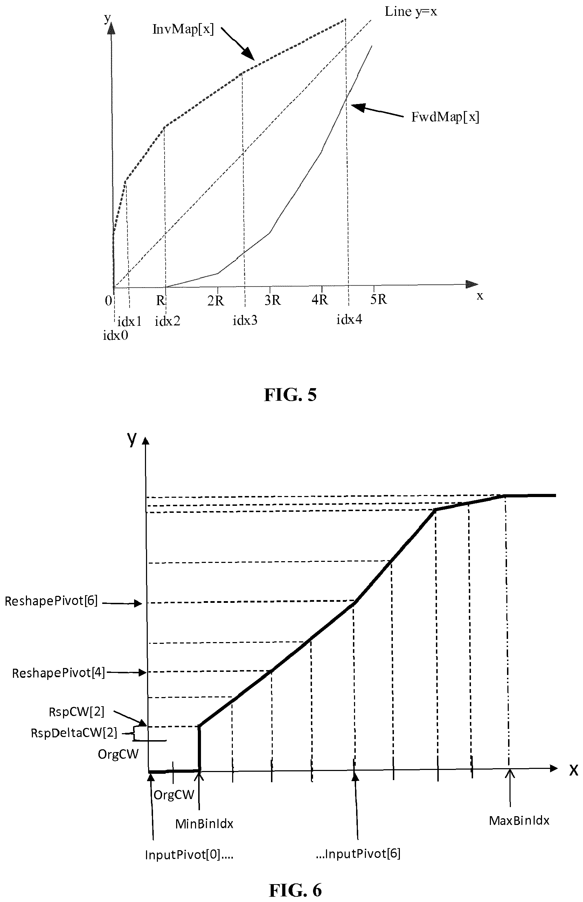

Besides, the inverse mapping function invMap is built as the inverse of the forward mapping function. It is mathematically built as the symmetric function of fwdMap related to the line defined by the equation y = x, as illustrated in **Figure 5**. An issue with such inverse mapping is that it cannot be applied on-the-fly as easily as the forward mapping. Indeed, even if the inverse mapping function remains piece-wise linear, the identification of the index of the piece which a value Y belongs to is not straightforward. Contrarily to the forward mapping case, where a simple shifting operation can be applied, this is more complicated for the inverse mapping case because the indices of the pieces of the inverse mapping function are not multiple of a pre-defined length that is power of 2. This is illustrated in Figure 5 where the indices of the pieces of the inverse mapping functions ($idx_0$ to $idx_4$) are not equi-distantly distributed along the horizontal axis since by construction $idx_k$ = fwdMap[k*R]. This operation of index finding is known as "binary search" and is of complexity O(log2(n)).

At least one embodiment aims at simplifying the forward and inverse mapping process and making their carriage more flexible (i.e. not fixed to 16 PWL sections as in JVET-M0427) by carrying a very limited set of parameters representative of a unique piece-wise linear (order 1) or polynomial (order 2) section.

In one embodiment, the reshaping curve is modeled with one main Piece-Wise Linear (PWL) section (first order -- especially for SDR content) or one main Piece-Wise Polynomial (PWP) section (second order -- especially for HDR content).

At least one embodiment thus allows reducing the complexity at the decoder side (and possibly at the encoder side according to certain variants) as well as decreasing the number of parameters carried. On-the fly implementation is simplified. Indeed, for SDR, only one (hardware-friendly) linear interpolation operation is required per sample at the decoder (without index finding). For HDR, only a couple of multipliers are required. In at least one embodiment, currently adopted reshaping syntax as defined in JVT-M0427 is adjusted, extended or replaced.

**Flexible piece wise linear model (adjustment to current syntax)**

The following solution requires a few modifications to the current reshaping model. The simplifications mainly apply for the derivation of a one piece wise linear curve (i.e. only one slope is signaled for the whole reshaping curve). In that case there may be no requirement of index retrieval for the inverse mapping (only interpolation). There is thus no need of a binary search for retrieving the index. For 16 PWL, up to 4 comparisons per pixels are avoided.

The idea here is to derive the current syntax so that it can support a flexible piece wise linear model. Indeed, as illustrated on **Figure 6,** the current syntax indicates the first and last bin which have a non-null slope in-between bins in a subset of 16 fixed pivots points. Typically, this makes sense in the case where a content is a legal range material for which luma is specified in the following range: [16<<(bitdepth_luma - 8) ; 235<<(bitdepth_luma - 8)] where bitdepth_luma is the bitdepth of a considered luma sample (greater or equal to 8). In that case, for a 10-bit luma sample, the maximum sample value range is [64 ; 940] and the reshaper curve bin size is typically 64. If the entire range is used by the considered content, then the first bin out (whose index is represented by reshaper_model_min_bin_idx) of the 16 fixed bins constituting the reshaper curve signaled would be 1 (1x64 = 64) and the last bin (whose index is differentially represented by reshaper_model_delta_max_bin_idx) one 15 (15x64 = 960) where the [0;64] and [960;1024] ranges are fixed. This means that possibly 15 pivots points representative of the piece wise linear model are signaled even if the slope in-between each bin (represented by reshape_model_bin_delta_abs_CW[i] or RspCW[i]) is the same (e.g. indicating actually a one piece-wise-linear curve). This is not an optimal coding of the curve.

Besides, in the case of a linear curve (represented by possibly 15 pivots points...), the binary search is not actually required on the decoder side.

Thus, the current syntax is modified in Table 2 to support a flexible number of pivot points (with uniform sampling either between min and max signaled bin or considering the entire abscissa scale or full range of the x-axis) between min and max bins to be transmitted. It is worth noting that in any case, the slope RspCW[i] is still computed between two signaled pivots points. The difference with syntax of Table 1 are indicated in italics.

**Table 2**

| tile_group_reshaper_model () { | Descriptor |
|---|---|
| **reshaper_model_min_bin_idx** | ue(v) |
| **reshaper_model_delta_max_bin_idx** | ue(v) |
| **reshaper_model_bindelta_abs_cw_prec_minus1** | ue(v) |
| *reshaper_model_num_pivots_minus1* | *ue(v)* |
| *for (i = 0; i <= reshaper_model_num_pivots-minus1 ; i++) {* | |
| **reshape_model_bin_delta_abs_CW** [i] | u(v) |
| if (reshaper_model_bin_delta_abs_CW[i]) > 0) | |
| **reshaper_model_bin_delta_sign_CW_flag**[i] | u(1) |
| } | |
| } | |

Possibly there is a constraint that the signaled pivot points are aligned on a power of 2 sample values relative to the abscissa scale (either relatively to the full abscissa scale or between the min/max signaled bins).

In an embodiment, the N signaled pivot points are located on the first N pivots points of the abscissa scale after MinBinIdx. In a variant, they are located at every INT(MaxBinIdx - MinBinIdx / N) step position between MinBinIdx and MaxBinIdx; where INT(x) represents the integer part of x. MinBinIdx represents the first occurrence of the lowest non-null value in the forward reshaping curve (ascending order). MaxBinIdx represents the first occurrence of the highest value in the forward reshaping curve (ascending order).

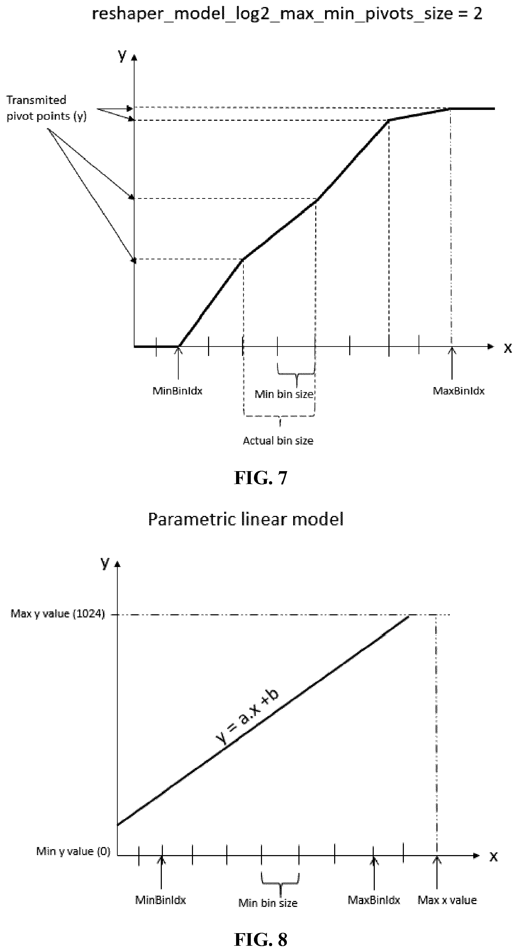

Possibly, **reshaper_model_num_pivots_minus1** is replaced by **reshaper_model_log2_max_min_pivots_size** where the number of pivot points signaled between the min and max signaled bins is a power of 2 (and aligned on a power of 2 sample values relative to the absolute abscissa scale) as indicated in Table 3 and illustrated by **Figure 7.**

**Table 3**

| tile_group_reshaper_model () { | Descriptor |
|---|---|
| **reshaper_model_min_bin_idx** | ue(v) |
| **reshaper_model_delta_max_bin_idx** | ue(v) |
| **reshaper_model_bindelta_abs_cw_prec_minus1** | ue(v) |
| *reshaper_model_log2_max_min_pivots_size* | *ue(v)* |

(continued)

| tile_group_reshaper_model () { | Descriptor |
|---|---|
| for (i = 0; i < NumPivotPoints ; i++) { | |
| reshape_model_bin_delta_abs_CW[i] | u(v) |
| if (reshaper_model_bin_delta_abs_CW[i]) > 0) | |
| reshaper_model_bindelta_sign_CW_flag[i] | u(1) |
| } | |
| } | |

where NumPivotPoints is derived from reshaper_model_log2_max_min_pivots_size e.g. NumPivotPoints = 1<<reshaper_model_log2_max_min_pivots_size where << is a left shift operator.

On Figure 7, only 4 pivot points are signaled in the bitstream using the syntax of table 3 instead of 8 pivot points in the case where the syntax of table 1 is used. The signaled pivot points are aligned on a power of 2 sample values relative to the abscissa scale (either relatively to the full abscissa scale or between the min/max signaled bins).

When **reshaper_model_log2_max_min_pivots_size** is equal to 0, then a one piece wise linear model is used between MinBinIdx and MaxBinIdx. Possibly, **reshaper_model_num_pivots_minus1** is a replaced by a flag **reshaper_model_linear_flag** which indicates a linear section between min and max signaled bins as indicated in Table 4.

**Table 4**

| tile_group_reshaper_model () { | Descriptor |
|---|---|
| reshaper_model_min_bin_idx | ue(v) |
| reshaper_model_delta_max_bin_idx | ue(v) |
| reshaper_model_bindelta_abs_cw_prec_minus1 | ue(v) |
| *reshaper_model_linear_flag* | *u(1)* |
| for (i = MinBinStart; i <=MaxBinEnd ; i++) { | |
| reshape_model_bin_delta_abs_CW[i] | u(v) |
| if (reshaper_model_bin_delta_abs_CW[i]) > 0) | |
| reshaper_model_bin_delta_sign_CW_flag[i] | u(1) |
| } | |
| } | |

where MinBinStart and MaxBinEnd are respectively equal to 0 and 1 when **reshaper_model_linear_flag** is equal to 1, otherwise (when **reshaper_model_linear_flag** is equal to 0) the semantic is as existing in the current draft (state of the art) i.e. MinBinStart = MinBinIdx and MaxBinStart = MaxBinIdx.

### Parametric model (linear, parabolic/square)

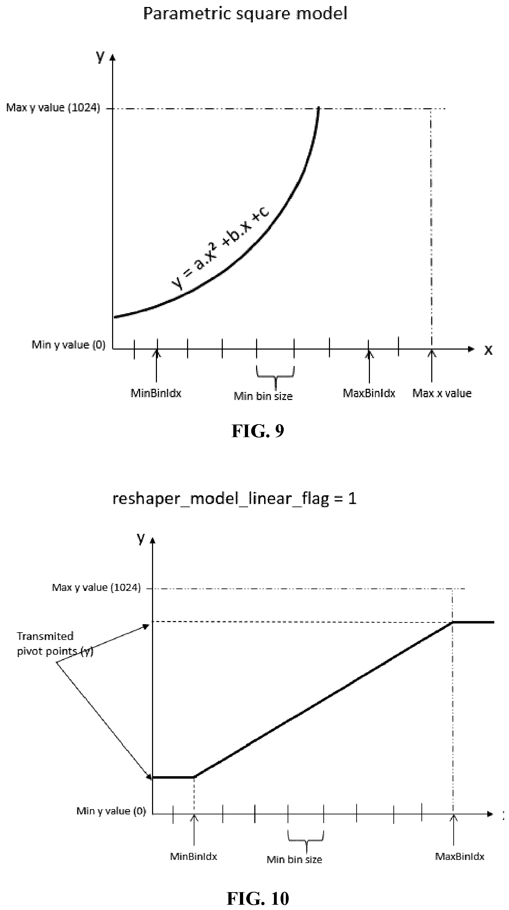

SDR content and HDR content may be subject to different reshaping curve profiles. In an embodiment, SDR reshaping curve is modeled by a model of first order as illustrated by **Figure 8** (linear: y = a.x + b with a and b transmitted parameters) and HDR reshaping curve is modeled by a model of second order as illustrated by **Figure 9** (square: $y = a.x^2+b.x +c$). The current reshaper syntax is changed and parameters representative of the first and second order model are carried in the bitstream. The proposed approach may be exclusive or complementary to existing one for instance by proposing linear/parabolic model as an alternative in the syntax to current PWL.

The linear model as illustrated on Figure 8 is less complex than the current reshaper model since no look-up table index needs to be determined either for the forward reshaper or the inverse reshaper but only a linear interpolation is operated.

Considering two different points $Z_1(x_1, y_1)$ and $Z_2(x_2, y_2)$ the y = a.x + b curve passes through, parameters a and b may be determined as follows:

$$a = \frac{y_2 - y_1}{x_2 - x_1}$$

$$b = y_1 - \frac{y_2 - y_1}{x_2 - x_1} . x_1$$

$Z_1$ and $Z_2$ may be selected as two points of the forward reshaping curve pre-determined by a method such as the one currently implemented in the VTM4 software and documented in section 3.7.3, entitled Luma mapping with chroma scaling (LMCS), of JVET-M1002-v1 (see Jianle Chen et al. "Algorithm description for Versatile Video Coding and Test Model 4 (VTM 4)", JVET 13th Meeting: Marrakech, MA, 9-18 Jan. 2019, JVET-M1002-v1).

For instance, $Z_1$ and $Z_2$ are the points of the forward reshaping curve which match with abscissa MinBinIdx and MaxBinIdx, respectively.

Alternatively, parameters a and b may be determined as described above however for simplification's sake, two new points located on the newly determined line, $Z_0$ and $Z_f$, which may be out of the [MinBinIdx, MaxBnIdx] range, are advantageously chosen being the boundaries of the full range (i.e. at abscissa 0 and 1<<bitdepth). Indeed, in that case a and b parameters may be expressed relative to $Z_0(x_0, y_0)$ and $Z_f(x_f, y_f)$ as follows:

$$a = \frac{\left(y_f - y_0\right)}{2^{bitdepth}}$$

$$b = y_0$$

With this formulation, integer computation is straightforward. Eventually, a and b are determined by the knowledge of $y_f$ and yo which may be only two values carried in the bitstream.

As a variant, a and b parameters are determined thanks to the processing of predetermined pivot points of the forward reshaping curve (such as pivot points of the PWL curve implemented in VTM4 and documented in JVET-M1002-v1). As an example, linear regression is operated onto considered points such as an Ordinary Least Square method as follows:

$$a = \frac{n.\sum_i x_i.y_i - \sum_i x_i.\sum_i y_i}{n.\sum_i x_i{}^2 - (\sum_i x_i)^2}$$

$$b = \bar{y} - a.\bar{x}$$

where *n* is the number of given samples, *i* is the index of a sample $(x_i, y_i)$, overbar designates mean of given value.

Knowing a and b parameters of the linear interpolation, reconstruction of the forward reshaping curve is straightforward.

Additionally, the reciprocal of the linear model y = a.x + b is also a linear model, y' = a'.x + b' which is determined from parameters a and b as follows:

$$a' = \frac{1}{a}$$

$$b' = -\frac{b}{a}$$

Thus, inverse reshaping curve can be computed on-the-fly as well as a linear interpolation.

The square model may better fit the current HDR reshaping curve and it seems of acceptable complexity for on the fly computation on modern hardware. Some constraints may be applied on parameter "a" (in terms of bitdepth/precision) so that the term "a.$x^2$" under computation remains under limited/acceptable bitdepth precision (e.g. "a" is less than 14 bits).

In the case of a parabolic model as illustrated on Figure 9, whose mapping equation is: $y=ax^2+bx+c$, the computation of the parameters is a little different. Unlike the linear model that may take two points, this model requires three points for computing the parameters (a, b and c). Mathematically, this can be formulated as follows:

Given three points $(x_1, y_1)$, $(x_2, y_2)$, $(x_3, y_3)$ (e.g. belonging to the forward reshaping LUT pre-computed by a method such as in VTM4 or documented in JVET-M1002), the following three equations are hold:

$$y_1 = a.x_1{}^2 + b.x_1 + c$$

$$y_2 = a.x_2{}^2 + b.x_2 + c$$

$$y_3 = a.x_3{}^2 + b.x_3 + c$$

In the matrix format, the above equations can be written as:

$$\begin{pmatrix} y_1 \\ y_2 \\ y_3 \end{pmatrix} = \begin{pmatrix} x_1^2 & x_1 & 1 \\ x_2^2 & x_2 & 1 \\ x_3^2 & x_3 & 1 \end{pmatrix} \begin{pmatrix} a \\ b \\ c \end{pmatrix}$$

And the parameters are computed as:

$$\begin{pmatrix} a \\ b \\ c \end{pmatrix} = \begin{pmatrix} x_1^2 & x_1 & 1 \\ x_2^2 & x_2 & 1 \\ x_3^2 & x_3 & 1 \end{pmatrix}^{-1} \begin{pmatrix} y_1 \\ y_2 \\ y_3 \end{pmatrix}$$

Once the a,b, c parameters are computed, the inverse function can also be mathematically obtained using the quadratic formula, as follows:

First, reformulating the equation:

$$a.x^2 + b.x + c - y = 0$$

Then, the reciprocal function x(y) is:

$$x = -\frac{b}{2.a} + \sqrt{\left(\frac{b}{4.a}\right)^2 - \frac{c}{a} + \frac{y}{a}}$$

In other words, the inverse mapping function has the following form:

$$y = \alpha + \sqrt{\beta + \frac{x}{\gamma}}$$

where:

$$\alpha = \frac{b}{2.a}$$

$$\beta = \left(\frac{b}{4.a}\right)^2 - \frac{c}{a}$$

$$\gamma = \frac{1}{a}$$

Advantageously, the three points can be selected in the following manner:

- The x-value of the first point correspond the minimum value of the input signal, and the y-value correspond to zero (0);
- Last point corresponds to the maximum value of the input signal, and the y-value corresponds to the maximum internal data representation (e.g. 1023 for 10 bits representation);
- Middle point x-value corresponds to the median or mean value of the input data, and the y-value corresponds to the middle value of the internal representation (e.g. 512 for 10-bit representation).

Advantageously, both forward and inverse mapping functions are represented each by three points transmitted in the bitstream.

By doing so, the histogram of the input data is expected to well cover the full range of the coder internal representation and thus proper code-words are assigned.

Alternatively, a, b c parameters may be determined thanks to a polynomial (of order 2) regression operated on the entire forward reshaping LUT data set (e.g. using Polynomial Least Squares method) retrieved from a currently implemented method (in VTM4 or JVET-M1002) and three points belonging to this regressed curve are selected as described below.

The syntax to transmit parameters a, b and possibly c may be defined as indicated in Table 5.

**Table 5**

| tile_group_reshaper_model () { | Descriptor |
|---|---|
| reshaper_model_min_bin_idx | ue(v) |
| reshaper_model_delta_max_bin_idx | ue(v) |
| *reshaper_model_offset* | *ue(v)* |
| *reshaper_model_order1* | *ue(v)* |
| *reshaper_model_parabolic_flag* | *u(1)* |
| *if(reshaper_model_parabolic_flag)* | |
| *reshaper_model_order2* | *ue(v)* |
| *}* | |

where a and b parameters of linear model, b and c parameters of parabolic model are represented by syntax element reshaper_model_offset, reshaper_model_order1, respectively. Parabolic term reshaper_model_order2 is subject to a presence flag reshaper_model_parabolic_flag. It is noted that the curve specified by parameters is valid in the range [MinBinIdx, MaxBinIdx], represented by reshaper_model_min_bin_idx, reshaper_model_delta_max_bin_idx.

Possibly, MinBinIdx and MaxBinIdx (or MinValue, MaxValue representative of the actual min and max values of the input content) are carried to bound the model values. Abscissa and ordinates are possibly clipped on the full range scale or on the legal range scale.

Alternatively, two or three points are signaled (limited bitdepth/precision e.g. 16 bits each) as indicated in Table 6 through which the linear or square curve go, respectively. Indeed, a and b parameters of the linear model are determined by the knowledge of two points, while a, b and c parameters of the parabolic model are determined by the knowledge of three points.

**Table 6**

| tile_group_reshaper_model () { | Descriptor |
|---|---|
| reshaper_model_min_bin_idx | ue(v) |

(continued)

| tile_group_reshaper_model () { | Descriptor |
|---|---|
| **reshaper_model_delta_max_bin_idx** | ue(v) |
| ***reshaper_model_parabolic_flag*** | *u(1)* |
| *for(i =0; i< ReshaperModelNumPoints; i ++)* | |
| ***reshaper_model_point[i]*** | *u(v)* |
| } | |

where ReshaperModelNumPoints, representative of the number of pivots points representative of the forward reshaping curve, is derived as follows:

ReshaperModelNumPoints = reshaper_model_parabolic_flag + 2 reshaper_model_parabolic_flag is set to 1 for the square/parabolic reshaping model and set to 0 for the linear reshaping model.

### Encoder-side only derivation

The proposed linear and square models may be applied at the encoder-side only. Parameters are thus determined from proposed previous approach(es). However, points belonging to the forward in-loop reshaping curve modeled by the proposed approach(es) are coded with the current in-loop reshaping syntax defined in Table 1.

### Min/max (x or v) model

In the case where: only one piece-wise linear section is signaled/transmitted, MinBinIdx does not have a value set to 0 and MaxBinIdx does not have a value set to the maximum value reachable in the range by the last bin (e.g. 960 or 1024) then the following values are the ones signaled : min Y value represented by **reshape_model_bin_start_CW** and    max    Y    value    represented    by    differential    **reshape_model_bin_delta_end_CW**    against **reshape_model_bin_start_CW**. These values are used to reconstruct the reshaper curve. Min Y value is the value on the one piece-wise linear section for abscissa 0 and max Y value is the value on the one piece-wise linear section for the latest abscissa point plus one (e.g. 1024 for 10 bits). Min Y and Max Y values are illustrated on **Figure 10.** The transmitted    pivots    points    mentioned    on    Figure    10    are    reshape_model_bin_start_CW    and reshape_model_bin_delta_end_CW in the syntax. They correspond either to the "Y" values of abscissa MinBinIdx and MaxBinIdx or to the "Y" value of abscissa 0 and 1024 (in case of 10 bits).

**Table 7**

| tile_group_reshaper_model () { | Descriptor |
|---|---|
| **reshaper_model_min_bin_idx** | ue(v) |
| **reshaper_model_delta_max_bin_idx** | ue(v) |
| **reshaper_model_bin_cw_prec_minus1** | ue(v) |
| ***reshape_model_bin_start_CW*** | *u(v)* |
| ***reshape_model_bin_delta_end_CW*** | *u(v)* |
| } | |

There may be more straightforward equivalent syntax which signals MinBinIdx, MaxBinIdx, min Y value and max Y value, directly. reshaper_model_bin_cw_prec_minus 1 (representative of number of bits) applies to both **reshape_model_bin_start_CW** and **reshape_model_bin_delta_end_CW.**

### Implicit reshaping (legal/fufl range)

Possibly, pivot points values are not transmitted, and reshaping curve is built on the entire full range according to the ordinates (e.g. covering [0 ; 1023] along y-axis for a 10-bit luma sample). In that case, only MinBinIdx and MaxBinIdx is carried, but the slope is not carried as in Table 8.

**Table 8**

| tile_group_reshaper_model () { | Descriptor |
|---|---|
| **reshaper_model_min_bin_idx** | ue(v) |
| **reshaper_model_delta_max_bin_idx** | ue(v) |
| } | |

Possibly, the current syntax can be adjusted to be compliant with both implicit (one piecewise linear) and explicit (current mode) modes as in Table 9.

**Table 9**

| tile_group_reshaper_model () { | Descriptor |
|---|---|
| **reshaper_model_min_bin_idx** | ue(v) |
| **reshaper_model_delta_max_bin_idx** | ue(v) |
| ***reshaper_model_linear_flag*** | u(1) |
| *if(!reshaper_model_linear_flag){* | |
| **reshaper_model_bin_delta_abs_cw_prec_minus1** | ue(v) |
| for (i = reshaper_model_min_bin_idx; i <= reshaper_model_max_bin_idx; i++) { | |
| **reshape_model_bin_delta_abs_CW** [i] | u(v) |
| if (reshaper_model_bin_delta_abs_CW[i]) > 0) | |
| **reshaper_model_bindelta_sign_CW_flag**[i] | u(1) |
| } | |
| } | |
| } | |

Possibly (notably when input content is full range), syntax elements representative of MinBinIdx and MaxBinIdx are set to 0 and are not signaled (i.e. subject to an upstream presence flag).

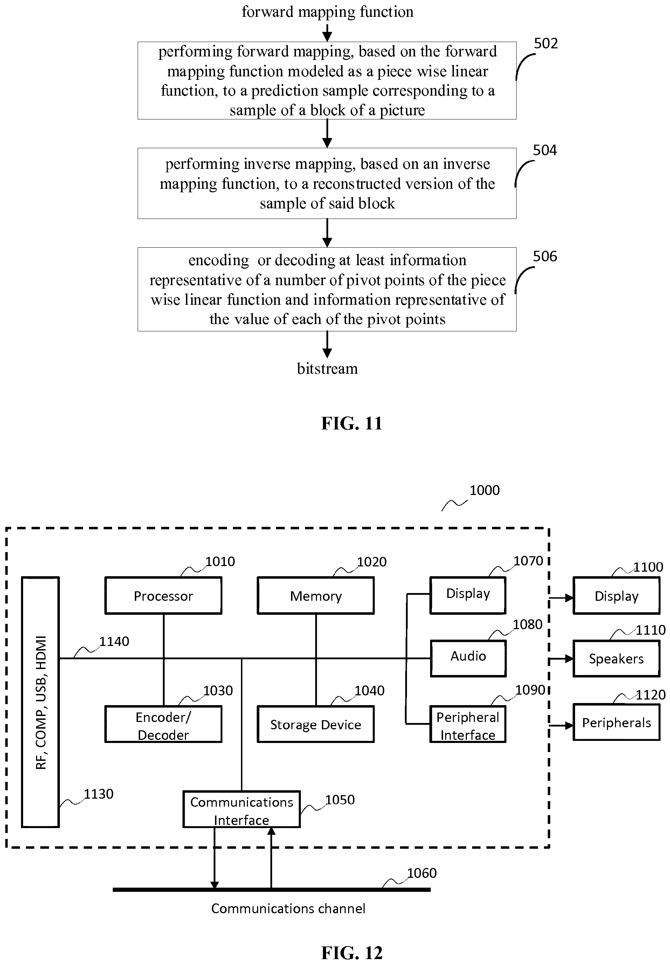

**Figure 11** depicts a flowchart of a decoding method (encoding method respectively) according to a general aspect of at least one embodiment.

At 502, forward mapping is performed to a prediction sample corresponding to a sample of a block of a picture. The forward mapping is based on a forward mapping function modeled as a piece wise linear function.

At 504, inverse mapping is performed to a reconstructed version of the sample of the block. The inverse mapping is based on an inverse mapping function.

At 506, at least information representative of a number of pivot points of the piece wise linear function (e.g. reshaper_model_num_pivots_minus1, reshaper_model_log2_max_min_pivots_size, reshaper_model_linear_flag or reshaper_model_parabolic_flag, etc) and information representative of the value of each of the pivot points are decoded (encoded respectively).

In all the various embodiments, the information sent for signaling the forward mapping function may be in the same way signaled for the inverse mapping function.

Advantageously, the various embodiments reduce complexity both at the encoder and decoder over the state-of-the art and provide a more flexible syntax (and possibly more compact according to the variants).

The proposed one piece curve (either linear or parabolic) is inversible thus the concatenation of the forward LUT with the approximated inverse LUT is very close to the identity function according to the computation precision (when not purely identical).

The various embodiments enable more flexibility in the syntax as it reduces syntax overhead (not considering systematically 16 pivots points or a fixed number of pivots points to be reconstructed by the decoder). Above all, the proposed approach is less complex than state of the art as both encoder and decoder sides in-loop reshaping feature can be computed on-the-fly; possibly with a unique linear interpolation for SDR content and parabolic interpolation/PWL for HDR content. To some extent the proposed approach may be combined (added) to existing one; for instance, linear model may be used an alternative to PWL.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example, the forward and inverse mapping modules (290, 291, 395, 396), of a video encoder 100 and decoder 200 as shown in Figure 2 and Figure 3. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example, the number of signaled pivot points. The specific values are for example purposes and the aspects described are not limited to these specific values.

**Figure 12** illustrates a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in Figure 12, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, decoding information representative of a number of pivot points and information representative of the value of each of the pivot points.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, encoding information representative of a number of pivot points and information representative of the value of each of the pivot points.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, for example, reshaper_model_num_pivots_minus1, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a number of pivot points. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination.

According to an embodiment, a method of video encoding or decoding is provided, comprising:.

performing forward mapping, based on a forward mapping function modeled as a piece wise linear function, to a prediction sample corresponding to a sample of a block of a picture; and
performing inverse mapping, based on an inverse mapping function, to a reconstructed version of the sample of the block,
wherein at least information representative of a number of pivot points of the piece wise linear function and information representative of the value of each of the pivot points are encoded or decoded.

According to another embodiment, an apparatus for video encoding or decoding is provided, comprising one or more processors, wherein the one or more processors are configured to perform:

forward mapping, based on a forward mapping function modeled as a piece wise linear function, to a prediction sample corresponding to a sample of a block of a picture; and
inverse mapping, based on an inverse mapping function, to a reconstructed version of the sample of the block,
wherein at least information representative of a number of pivot points of the piece wise linear function and information representative of the value of each of the pivot points are encoded or decoded.

According to another embodiment, a computer-readable medium is presented that includes instructions for causing one or more processors to perform:

forward mapping, based on a forward mapping function, to a prediction sample corresponding to a sample of a block of a picture; and
inverse mapping, based on an inverse mapping function, to a reconstructed version of the sample of the block,
wherein at least information representative of a number of pivot points of the piece wise linear function and information representative of the value of each of the pivot points are encoded or decoded.

According to another embodiment, a signal comprising encoded video, is presented wherein the signal is formed by performing:

forward mapping, based on a forward mapping function modeled as a piece wise linear function, to a prediction sample corresponding to a sample of a block of a picture; and
inverse mapping, based on an inverse mapping function, to a reconstructed version of the sample of the block,
wherein at least information representative of a number of pivot points of the piece wise linear function and information representative of the value of each of the pivot points are encoded in the signal.

In an embodiment, the information representative of a number of pivot points is the number of pivots points between minimum and maximum signaled bins signaled in the bitstream.
In an embodiment, the information representative of a number of pivot points is the binary logarithm of the number of pivot points.
In an embodiment, the information representative of a number of pivot points is a flag indicating whether the piece wise linear function comprises a linear section between minimum and maximum signaled bins.
In an embodiment, the information representative of a number of pivot points is a flag indicating whether the piece wise linear function is a parametric square model.
Further, embodiments can include one or more of the following features, devices, or aspects, alone or in any combination, across various claim categories and types:

- A bitstream or signal that includes one or more of the described syntax elements, or variations thereof.
- Inserting in the signaling syntax elements that enable the decoder to adapt forward and inverse mapping in a manner corresponding to that used by an encoder.
- Creating and/or transmitting and/or receiving and/or decoding a bitstream or signal that includes one or more of the described syntax elements, or variations thereof.
- A TV, set-top box, cell phone, tablet, or other electronic device that performs adaptation of forward and inverse mapping according to any of the embodiments described.
- A TV, set-top box, cell phone, tablet, or other electronic device that performs adaptation of forward and inverse mapping according to any of the embodiments described, and that displays (e.g. using a monitor, screen, or other type of display) a resulting image.
- A TV, set-top box, cell phone, tablet, or other electronic device that tunes (e.g. using a tuner) a channel to receive a signal including an encoded image, and performs adaptation of forward and inverse mapping according to any of the embodiments described.

- A TV, set-top box, cell phone, tablet, or other electronic device that receives (e.g. using an antenna) a signal over the air that includes an encoded image, and performs adaptation of forward and inverse mapping according to any of the embodiments described.

**Claims**

1. A method for decoding, comprising:

   performing forward mapping, based on a forward mapping function modeled as a piece wise linear function, to a prediction sample corresponding to a sample of a block of a picture; and
   performing inverse mapping, based on an inverse mapping function, to a reconstructed version of said sample of said block,
   wherein at least information representative of a number of pivot points of said piece wise linear function and information representative of the value of each of said pivot points are decoded.

2. An apparatus for video decoding, comprising one or more processors, wherein said one or more processors are configured to perform:

   forward mapping, based on a forward mapping function, to a prediction sample corresponding to a sample of a block of a picture; and
   inverse mapping, based on an inverse mapping function, to a reconstructed version of said sample of said block,
   wherein at least information representative of a number of pivot points of said piece wise linear function and information representative of the value of each of said pivot points are decoded.

3. The method of claim 1 or the apparatus of claim 2, wherein said information representative of a number of pivot points is the number of pivots points between minimum and maximum signaled bins signaled in the bitstream.

4. The method of claim 1 or the apparatus of claim 2, wherein said information representative of a number of pivot points is the binary logarithm of the number of pivot points.

5. The method of claim 1 or the apparatus of claim 2, wherein said information representative of a number of pivot points is a flag indicating whether the piece wise linear function comprises a linear section between minimum and maximum signaled bins.

6. The method of claim 1 or the apparatus of claim 2, wherein said information representative of a number of pivot points is a flag indicating whether the piece wise linear function is a parametric square model.

7. A method for encoding, comprising:

   performing forward mapping, based on a forward mapping function modeled as a piece wise linear function, to a prediction sample corresponding to a sample of a block of a picture; and
   performing inverse mapping, based on an inverse mapping function, to a reconstructed version of said sample of said block,
   wherein at least information representative of a number of pivot points of said piece wise linear function and information representative of the value of each of said pivot points are encoded.

8. An apparatus for video encoding, comprising one or more processors, wherein said one or more processors are configured to perform:

   forward mapping, based on a forward mapping function modeled as a piece wise linear function, to a prediction sample corresponding to a sample of a block of a picture; and
   inverse mapping, based on an inverse mapping function, to a reconstructed version of said sample of said block,
   wherein at least information representative of a number of pivot points of said piece wise linear function and information representative of the value of each of said pivot points are encoded.

9. The method of claim 7 or the apparatus of claim 8, wherein said information representative of a number of pivot points is the number of pivots points between minimum and maximum signaled bins signaled in the bitstream.

10. The method of claim 7 or the apparatus of claim 8, wherein said information representative of a number of pivot points is the binary logarithm of the number of pivot points.

11. The method of claim 7 or the apparatus of claim 8, wherein said information representative of a number of pivot points is a flag indicating whether the piece wise linear function comprises a linear section between minimum and maximum signaled bins.

12. The method of claim 7 or the apparatus of claim 8, wherein said information representative of a number of pivot points is a flag indicating whether the piece wise linear function is a parametric square model.

13. A computer-readable medium including instructions for causing one or more processors to perform:

   forward mapping, based on a forward mapping function, to a prediction sample corresponding to a sample of a block of a picture; and
   inverse mapping, based on an inverse mapping function, to a reconstructed version of said sample of said block, wherein at least information representative of a number of pivot points of said piece wise linear function and information representative of the value of each of said pivot points are decoded.

14. A computer-readable medium including instructions for causing one or more processors to perform:

   forward mapping, based on a forward mapping function, to a prediction sample corresponding to a sample of a block of a picture; and
   inverse mapping, based on an inverse mapping function, to a reconstructed version of said sample of said block, wherein at least information representative of a number of pivot points of said piece wise linear function and information representative of the value of each of said pivot points are encoded.

15. A signal comprising encoded video, formed by performing:

   forward mapping, based on a forward mapping function modeled as a piece wise linear function, to a prediction sample corresponding to a sample of a block of a picture; and
   inverse mapping, based on an inverse mapping function, to a reconstructed version of said sample of said block, wherein at least information representative of a number of pivot points of said piece wise linear function and information representative of the value of each of said pivot points are encoded in said signal.

(a)

(b)

**FIG. 1**

FIG. 2

EP 3 709 656 A1

Figure 3

FIG. 4

**FIG. 5**

**FIG. 6**

reshaper_model_log2_max_min_pivots_size = 2

**FIG. 7**

Parametric linear model

**FIG. 8**

## Parametric square model

**FIG. 9**

## reshaper_model_linear_flag = 1

**FIG. 10**

forward mapping function

↓

| performing forward mapping, based on the forward mapping function modeled as a piece wise linear function, to a prediction sample corresponding to a sample of a block of a picture | 502 |

↓

| performing inverse mapping, based on an inverse mapping function, to a reconstructed version of the sample of said block | 504 |

↓

| encoding or decoding at least information representative of a number of pivot points of the piece wise linear function and information representative of the value of each of the pivot points | 506 |

↓

bitstream

**FIG. 11**

1000

RF, COMP, USB, HDMI — 1130

Processor 1010
Memory 1020
1140
Encoder/ Decoder 1030
Storage Device 1040
Communications Interface 1050

Display 1070
Audio 1080
Peripheral Interface 1090

Display 1100
Speakers 1110
Peripherals 1120

1060
Communications channel

**FIG. 12**

Europäisches
Patentamt

European
Patent Office

Office européen
des brevets

**EUROPEAN SEARCH REPORT**

Application Number

EP 19 30 5282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LU (DOLBY) T ET AL: "CE12: Mapping functions (test CE12-1 and CE12-2)", 13. JVET MEETING; 20190109 - 20190118; MARRAKECH; (THE JOINT VIDEO EXPLORATION TEAM OF ISO/IEC JTC1/SC29/WG11 AND ITU-T SG.16 ), , no. JVET-M0427 15 January 2019 (2019-01-15), XP030202230, Retrieved from the Internet: URL:http://phenix.int-evry.fr/jvet/doc_end _user/documents/13_Marrakech/wg11/JVET-M04 27-v3.zip JVET-M0427_CE12-1_CE12-2_v3.docx [retrieved on 2019-01-15] | 1-5, 7-11, 13-15 | INV. H04N19/85 H04N19/46 H04N19/463 H04N19/182 H04N19/82 |
| Y | * pages 2,3,5,13 * ----- | 6,12 | |
| X | FRANCOIS (TECHNICOLOR) E: "CE12-related: in-loop reshaping with approximate inverse mapping function", 13. JVET MEETING; 20190109 - 20190118; MARRAKECH; (THE JOINT VIDEO EXPLORATION TEAM OF ISO/IEC JTC1/SC29/WG11 AND ITU-T SG.16 ), , no. JVET-M0640 11 January 2019 (2019-01-11), XP030201622, Retrieved from the Internet: URL:http://phenix.int-evry.fr/jvet/doc_end _user/documents/13_Marrakech/wg11/JVET-M06 40-v2.zip JVET-M0640.docx [retrieved on 2019-01-11] | 1-5, 7-11, 13-15 | |
| | | | TECHNICAL FIELDS SEARCHED (IPC) H04N G06T |
| Y | * the whole document * ----- -/-- | 6,12 | |

The present search report has been drawn up for all claims

| Place of search | Date of completion of the search | Examiner |
|---|---|---|
| Munich | 23 July 2019 | McGrath, Simon |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 3

Europäisches
Patentamt

European
Patent Office

Office européen
des brevets

## EUROPEAN SEARCH REPORT

**Application Number**

EP 19 30 5282

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KOOHYAR MINOO ET AL: "Draft Test Model for HDR extension of HEVC", 113. MPEG MEETING; 19-10-2015 - 23-10-2015; GENEVA; (MOTION PICTURE EXPERT GROUP OR ISO/IEC JTC1/SC29/WG11),, no. m37479, 21 October 2015 (2015-10-21), XP030065847, * the whole document * | 6,12 | |
| Y | US 2017/085889 A1 (BAYLON DAVID M [US] ET AL) 23 March 2017 (2017-03-23) * paragraphs [0047] - [0050] * | 6,12 | |
| A | TAORAN LU (DOLBY) ET AL: "CE12-related: Universal low complexity reshaper for SDR and HDR video", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0247 5 October 2018 (2018-10-05), XP030194851, Retrieved from the Internet: URL:http://phenix.int-evry.fr/jvet/doc_end_user/documents/12_Macao/wg11/JVET-L0247-v2.zip JVET-L0247_LC_reshaping_v1.docx [retrieved on 2018-10-05] * page 9 * | 1-15 | |

TECHNICAL FIELDS
SEARCHED (IPC)

-/--

The present search report has been drawn up for all claims

| Place of search | Date of completion of the search | Examiner |
|---|---|---|
| Munich | 23 July 2019 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 19 30 5282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LU TAORAN ET AL: "Adaptive reshaper for high dynamic range and wide color gamut video compression", PROCEEDINGS OF SPIE; [PROCEEDINGS OF SPIE ISSN 0277-786X VOLUME 10524], SPIE, US, vol. 9971, 27 September 2016 (2016-09-27), pages 99710B-99710B, XP060078010, DOI: 10.1117/12.2236050 ISBN: 978-1-5106-1533-5 * the whole document * | 1-15 | |
| A | WINKEN M ET AL: "CE2: SVC bit-depth scalability", 24. JVT MEETING; 81. MPEG MEETING; 29-6-2007 - 5-7-2007; GENEVA, CH;(JOINT VIDEO TEAM OF ISO/IEC JTC1/SC29/WG11 AND ITU-T SG.16 ),, no. JVT-X057, 4 July 2007 (2007-07-04), XP030007164, * page 11, lines 14-15 * | 1-15 | |
| A | US 2018/218481 A1 (EVANS GLENN F [US] ET AL) 2 August 2018 (2018-08-02) * paragraph [0231] * | 1-15 | TECHNICAL FIELDS SEARCHED (IPC) |

The present search report has been drawn up for all claims

| Place of search | Date of completion of the search | Examiner |
|---|---|---|
| Munich | 23 July 2019 | McGrath, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 30 5282

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2019

| Patent document cited in search report | | Publication date | Patent family member(s) | | Publication date |
|---|---|---|---|---|---|
| US 2017085889 | A1 | 23-03-2017 | EP | 3338450 A1 | 27-06-2018 |
| | | | EP | 3338451 A1 | 27-06-2018 |
| | | | EP | 3338452 A1 | 27-06-2018 |
| | | | JP | 2018530281 A | 11-10-2018 |
| | | | JP | 2018530282 A | 11-10-2018 |
| | | | KR | 20180056704 A | 29-05-2018 |
| | | | KR | 20180056705 A | 29-05-2018 |
| | | | US | 2017085879 A1 | 23-03-2017 |
| | | | US | 2017085880 A1 | 23-03-2017 |
| | | | US | 2017085889 A1 | 23-03-2017 |
| | | | WO | 2017053846 A1 | 30-03-2017 |
| | | | WO | 2017053849 A1 | 30-03-2017 |
| | | | WO | 2017053852 A1 | 30-03-2017 |
| US 2018218481 | A1 | 02-08-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TAORAN LU et al.** CE12: Mapping functions (test CE12-1 and CE12-2). *JVET 13th Meeting: Marrakech,* 09 January 2019

- **JIANLE CHEN et al.** Algorithm description for Versatile Video Coding and Test Model 4 (VTM 4). *JVET 13th Meeting: Marrakech,* 09 January 2019